# EUROPEAN PATENT APPLICATION

(11) **EP 4 321 920 A1**
(43) Date of publication of application: **14.02.2024**
(21) Application number: 23188634.2
(22) Date of filing: 31.07.2023
(51) Int. Cl.: G02B 23/12, F41G 1/32, G02B 13/16, G01C 21/00

(54) **NAVIGATION IN GPS DENIED ENVIRONMENTS THROUGH ENHANCED NIGHTVISION WITH TRANSPARENT OPTICAL DEVICE**

(30) Priority: 01.08.2022 US 202217878817
(71) Applicant: L3Harris Technologies, Inc., Melbourne, FL 32919 (US)
(72) Inventor: RAMSAY, Eric, Melbourne, 32919 (US); LEBEAU, James A., Melbourne, 32919 (US)
(74) Representative: Schmidt, Steffen J.

(57) **Abstract**

A nightvision system includes an underlying device that provides output light in a first spectrum. A transparent optical device transmits light in the first spectrum from the underlying device through the transparent optical device. The transparent optical device includes an active area of a semiconductor chip. The active area includes active elements that cause the underlying device to detect light from the underlying device and transparent regions formed in the active area which are transparent to the light in the first spectrum to allow light in the first spectrum to pass through from the underlying device to a user. An image processor processes feature maps produced using light detected by the first plurality of active elements. The image processor determines at least one of location, heading, elevation, or speed of the nightvision system or location of objects detected by the first plurality of active elements.

## Description

### BACKGROUND

### Background and Relevant Art

Nightvision systems allow a user to see in low-light environments without external human visible illumination. This allows for covert vision in a low-light environment to prevent flooding the environment with human visible light.

Some nightvision systems function by receiving low levels of light reflected off of, or emitted from objects and providing that light to an image intensifier (sometimes referred to as I²). The image intensifier has a photocathode. When photons strike the photocathode, electrons are emitted into a vacuum tube, and directed towards a microchannel plate to amplify the electrons. The amplified electrons strike a phosphor screen. The phosphor screen is typically chosen such that it emits human visible light when the amplified electrons strike the phosphor screen. The phosphor screen light emission is coupled, typically through an inverting fiber-optic, to an eyepiece where the user can directly view the illuminated phosphor screen, thus allowing the user to see the objects.

Modern nightvision systems include ancillary functionality. For example, some nightvision systems may include location hardware, such as global positioning satellite (GPS) radios that allow for determining the location of the nightvision system. This information can be displayed to a user to help the user know their geographical location as they view a local nightvision scene. However, certain environments may have difficulties using GPS signals. This can be for one or more of a number of different reasons. For example, GPS signals may be blocked by environmental conditions, such as canyon walls, foliage, moisture, being indoors, etc. Further, cosmic radiation may disrupt GPS signals. In some situations, GPS signals may be jammed by adversaries to prevent users from using GPS. GPS signals may be spoofed by adversaries to cause GPS radios to estimate incorrect locations. Thus, there are a multitude of conditions and factors that can prevent proper functioning of GPS systems.

The subject matter claimed herein is not limited to embodiments that solve any disadvantages or that operate only in environments such as those described above. Rather, this background is only provided to illustrate one exemplary technology area where some embodiments described herein may be practiced.

### BRIEF SUMMARY

One embodiment illustrated herein includes a nightvision system. The nightvision system includes an underlying device that is configured to provide output light in a first spectrum from input light received at the underlying device. A transparent optical device is optically coupled in an overlapping fashion to the underlying device. The transparent optical device includes an active area of a semiconductor chip. The active area includes active elements configured to cause the underlying device to detect light from the underlying device and transparent regions formed in the active area which are transparent to the light in the first spectrum to allow light in the first spectrum to pass through from the underlying device to a user. An image processor is configured to process images produced using light detected by the active elements to determine at least one of location, heading, elevation, or speed of the nightvision system or location of objects detected by the active elements.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features and advantages of the invention may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features can be obtained, a more particular description of the subject matter briefly described above will be rendered by reference to specific embodiments which are illustrated in the appended drawings. Understanding that these drawings depict only typical embodiments and are not therefore to be considered to be limiting in scope, embodiments will be described and explained with additional specificity and detail through the use of the accompanying drawings in which:
Figure 1 illustrates a nightvision system;
Figure 2 illustrates a nightvision scene image with heads-up display functionality;
Figure 3A illustrates a block diagram of a nightvision system including a processor for object identification and location determination using the object identification;
Figure 3B illustrates a cutaway diagram of components of a nightvision system with a processor for object identification and location determination using the object identification;
Figure 3C illustrates a block diagram of components of a nightvision system with a processor for object identification and location determination using the object identification;
Figure 4; illustrates an example of multiple nightvision system working in concert to determine location, orientation, and/or speed;
Figure 5 illustrates a transparent display structure cross-section view, including transparent regions; and
Figure 6 illustrates a method of performing object identification functionality in a nightvision system using transparent optical devices.

### DETAILED DESCRIPTION

Embodiments illustrated herein are directed to using a transparent optical device in conjunction with nightvision equipment, such as an image intensifier (or other nightvision system). In particular, embodiments are directed to a nightvision system which includes and underlying nightvision device and a transparent optical device. The transparent optical device allows light produced by the underlying nightvision device to pass through the transparent optical device and be transmitted to a user. The transparent optical device is an active device which is capable of detecting light produced by the underlying nightvision device. Object and feature recognition can be performed by an image processor to identify various objects, edges, features and the like. The nightvision system may further include functionality for matching the detected objects, edges, features and the like with known environmental characteristics. Using this information, embodiments can determine a navigational heading, the speed at which the user is moving, coordinates, and the like. For example, embodiments may be able to identify terrain characteristics, celestial bodies and/or constellations, vehicles operating in the environment where characteristics of the vehicles such as position and speed are known, etc. and use this identified information to establish position of the nightvision device, speed at which the nightvision device is moving, three-dimensional angles of orientation of the nightvision device, etc.

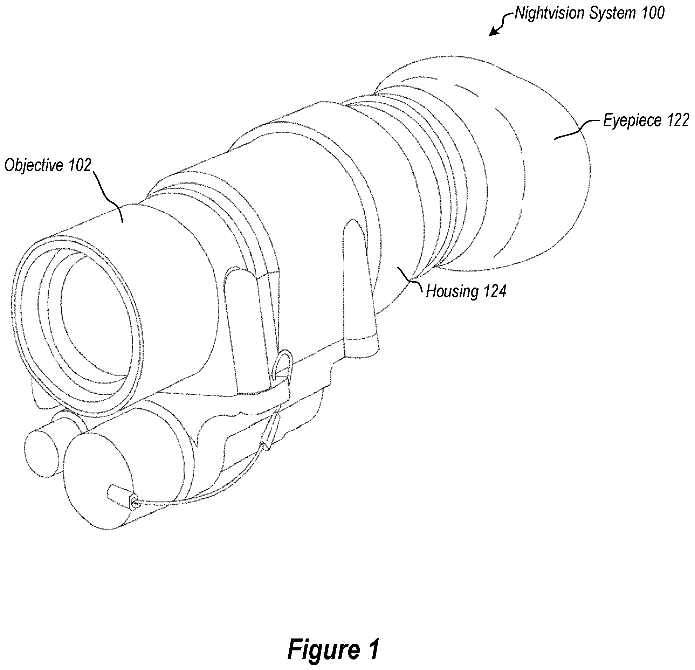

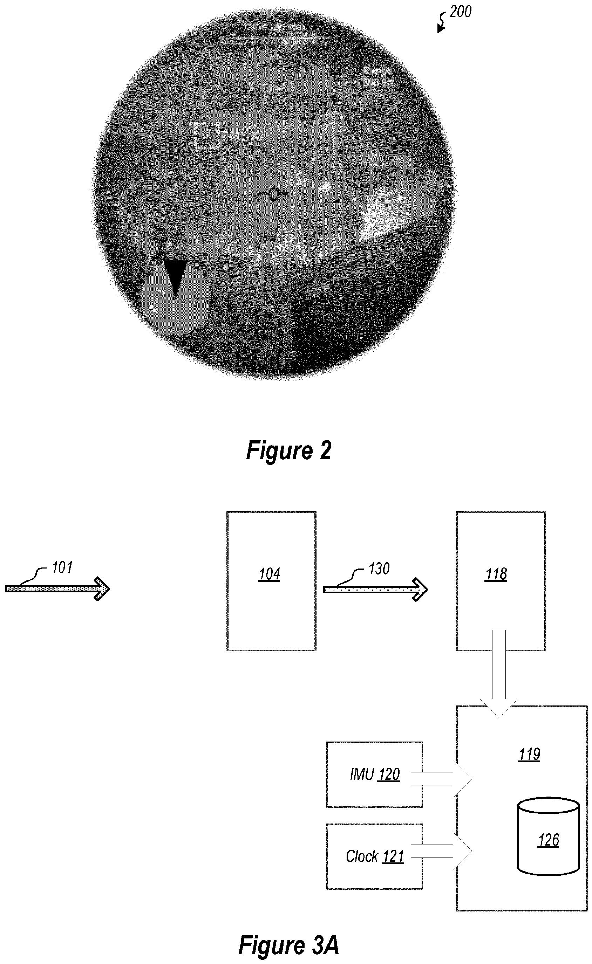

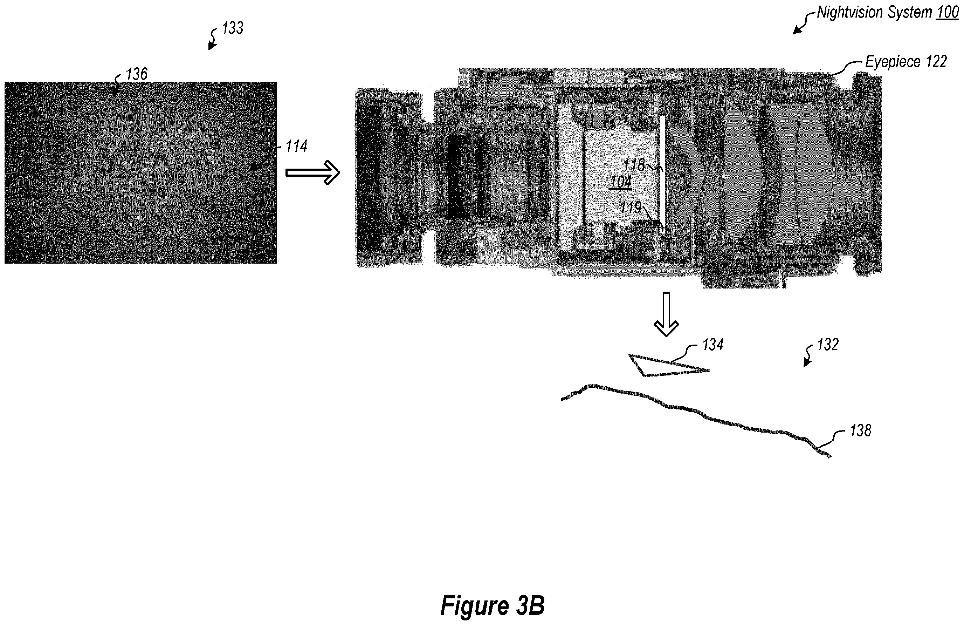

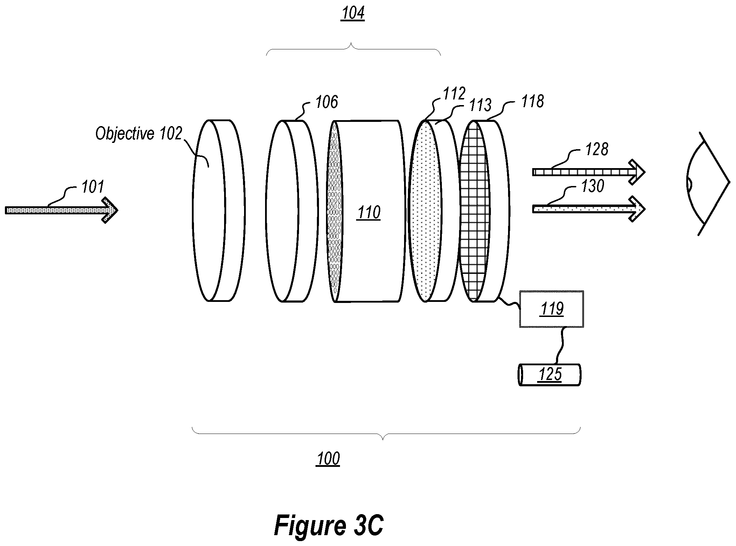

Additional details are illustrated. Attention is now directed to Figure 1, where a specific example of a nightvision system is illustrated. In particular, Figure 1 illustrates the PVS - 14 nightvision system 100. In the example illustrated, the nightvision system 100 includes a housing 124. As will be illustrated in more detail below in other figures, the housing 124 houses an image intensifier, a transparent optical device (see e.g., Figures 3A, 3B and 3C and transparent optical device 118), and various other components. The nightvision system 100 further includes an objective 102 which receives weak light reflected and/or generated in an environment. The objective 102 includes optics such as lenses, waveguides, and/or other optical components for receiving and transmitting light to an image intensifier, discussed in more detail below. The nightvision system 100 further includes an eyepiece 122. The eyepiece 122 includes optics for filtering images created by the nightvision system 100, including images created by an image intensifier and images created by a transparent optical device, into the eye of the user.

As discussed above, and with reference to Figure 2, modern ancillary functionality can be added to existing nightvision systems. Figure 2 illustrates an image 200 including a heads-up display displayed on a nightvision image output from an intensifier tube. Some embodiments described herein are directed to implementing a heads-up display implemented by adding image overlay capabilities with a nightvision system, where the image overlay capabilities are added by using a transparent optical device including a display.

The heads-up display may display to the user, in or around the field-of-view of an environment, various pieces of information to create an augmented reality (AR) environment. Such information may include, for example, a navigational heading, the speed at which the user is moving, coordinates, communication messages (such as email, SMS, etc.), time of day or other timing information, vital signs for the user such as heart rate or respiration rate, indicators indicating whether an object being viewed by the nightvision system is friendly or adversarial, battery charge level for the nightvision system or other devices, weather conditions, contact information, audio information (such as volume, playlist information, artist, etc.), etc. Note that the transparent optical device 118 (or other elements) includes photodetectors for detecting intensified light to determine brightness in a scene, the locations of various objects in the field of view, or other information. This information can be used for location functionality as described above and in more detail below, target indicators, or other images output by the transparent optical device 118.

Note that in some embodiments the navigational heading, the speed at which the user is moving, coordinates and the like are derived from GPS data available at the nightvision system 100, such as from GPS radios included in the nightvision system 100. Alternatively, such information can be derived from geolocation information using cellular tower triangulation. As noted above, however, the nightvision system 100 may be operated in an environment where GPS or cellular signals are partially or wholly denied. This prevents radios at the nightvision system 100 from using GPS and/or cellular data from being used to geolocate the nightvision system 100, thus preventing the data from being used to display the navigational heading, the speed at which the user is moving, coordinates and the like to the user as shown in Figure 2. Nonetheless, embodiments illustrated herein implement a transparent optical device that can be used to detect features of objects in a nightvision scene. An image processor can process detected features to identify specific, particular objects. For example, specific landmarks can be identified. Alternatively, celestial bodies can be identified (such as the moon, particular stars, or combinations therefor, such as in constellations, etc.). Etc. This information can be used by the image processor to determine navigational heading, speed at which the user is moving, coordinates and the like. Additional details are now illustrated.

Attention is now directed to Figures 3A, 3B and 3C. Figures 3A, 3B and 3C illustrate a block diagram, a cutaway and a block diagram respectively of embodiments of the invention. A nightvision system typically includes an objective 102 to focus input light 101 into an underlying device 104. It should be appreciated that in various embodiments, the underlying device 104 may be one or more of a number of different types of nightvision devices, such as IR CCD cameras, CMOS cameras, image intensifiers, and the like. In the example illustrated in Figure 3C, the underlying device 104 is an image intensifier. Input light 101 may be, for example, from ambient sources, such as light from heavenly bodies such as stars, the moon, or even faint light from the setting sun. Additionally, or alternatively, ambient sources could include light from buildings, automobiles, or other faint sources of light that cause reflection of light from an object being viewed in a nightvision environment into the objective. A second source of light may be light being emitted from an external source towards an object, reflected off the object, and into the objective. For example, the source may be an infrared source that is not viewable in the viewable spectrum for human observers. A third source of light may be light emitted by an object itself. For example, this may be related to visible light, infrared heat energy emitted by the object and directed into the objective, etc. Nonetheless, the nightvision system is able to convert the light emitted from the source into a viewable image for the user.

The objective directs input light 101 into the underlying device 104. Note that the underlying device 104 may include functionality for amplifying light received from the objective to create a sufficiently strong image that can be viewed by the user. This may be accomplished using various technologies. In the image intensifier example of Figure 3C, a photocathode 106, a microchannel plate 110, and a phosphor screen 112 are used. The photocathode 106 may be configured to generate photo electrons in response to incoming photons. Electrons from the photocathode 106 are emitted into the microchannel plate 110. Electrons are multiplied in the microchannel plate 110.

Electrons are emitted from the microchannel plate 110 to a phosphor screen 112 which glows as a result of electrons striking the phosphor screen 112. This creates a monochrome image from the input light 101.

A fiber-optic 113 carries this image as intensified light to the eyepiece (such as eyepiece 122 illustrated in Figure 1) of a nightvision system where it can be output to the user. This fiber-optic 113 can be twisted 180 degrees to undo the inversion caused by the system objective to allow for convenient direct viewing of the phosphor screen 112.

Figures 3A, 3B and 3C further illustrate the transparent optical device 118. The transparent optical device 118 allows intensified light to pass through the transparent optical device 118, but also, in some embodiments, generates its own light, from LEDs or other light emitters, to transmit the generated light to a user. Creating a transparent optical device may be accomplished, for example, using the teachings of United States Patent Application No. 16/868,306, filed on May 6, 2020, titled "Backside Etch Process For Transparent Silicon Oxide Technology", which is incorporated herein by reference, in its entirety.

The transparent optical device 118 is typically implemented behind the fiber-optic 113 (i.e., closer to the eyepiece than the fiber-optic 113), but in other embodiments may be implemented in front of the fiber-optic 113. The use of a fiber-optic within nightvision systems inverts and translates the focal plane allowing the transparent optical device 118 overlay to be presented on either side without impacting the ability for the eyepiece to focus on the image. However, certain manufacturing or mechanical constraints may incentivize placement of the transparent optical device 118 behind the fiber-optic including the difficulty in inserting electronics within the vacuum package of the underlying device 104. Placing the transparent optical device 118 external to the fiber-optic can be done to allow the transparent optical device 118 to be applied to a system after the image intensifier tube has been manufactured and sealed, lowering production difficulties. As discussed above, the transparent optical device 118 may include functionality for displaying information to a user. Such information may include graphical content, including text, images, and the like. In some embodiments, the transparent optical device 118 may display in shaded monochrome. Alternatively, or additionally, the transparent optical device 118 may display in multiple colors. Alternatively, or additionally, the transparent optical device 118 may display in 1-bit monochrome. As noted previously, in some embodiments, the transparent optical device 118 may display a navigational heading, the speed at which the user is moving, coordinates, etc. Note that while a single transparent optical device 118 is illustrated, in other embodiments, multiple transparent optical devices may be implemented in an optical path. For example, some transparent optical devices may emit light, while other transparent optical devices absorb and detect light. Embodiments illustrated herein include at least one transparent optical device capable of absorbing and detecting light for use in detecting features of objects to identify navigational heading, speed at which a user is moving, coordinates, etc. when GPS or other geo-locating signals are denied or diminished.

In the example illustrated in Figures 3A, 3B and 3C, the transparent optical device 118 outputs display light 128 which can be sent to the eyepiece (such as the eyepiece 122 illustrated in Figure 1). As noted previously, the intensified light 130 is also provided to the eyepiece. Thus, an image such as that illustrated in Figure 2 is presented to the user in the nightvision system.

As noted previously, the transparent optical device 118 is composed of active silicon elements, typically in a grid arrangement to implement various pixels. The active elements cause the device to have certain optical performance capabilities. Such capabilities may be one or more of abilities to output color output, output monochrome output, detect light, etc. Typically, the transparent optical device 118 is a digital detector and potentially display having a certain pixel density for the detector and potentially a display. Often, each pixel is implemented on a single active island, although in other embodiments, an island may have multiple pixels, or even only a single sub-pixel element. Each pixel may have one or more transistors controlling one or more OLED emitters (or other light emitting devices). Pixels may additionally or alternatively include light detectors. This can be useful for detecting the intensified light from the phosphor screen 112 or other optical output when other underlying devices are used. This detected light can be used to characterize an image intensifier (or other) image. For example, the detected light can be used for recording scene events. Alternatively, or additionally, the detected light can be used for improving placement of elements displayed on the heads-up display shown in Figure 2. For example, edge detection techniques may be used using the detected light, and images generated and displayed by the transparent optical device 118 can be keyed off of these detected edges. Edge detection techniques may be used using the detected light, and navigational heading, speed at which the user is moving, coordinates, etc., can be keyed off of these detected edges as explained in more detail below.

In any case, the transparent optical device 118 is representative of a stacked device formed in a semiconductor chip that overlaps an underlying device 104. In the case shown in Figure 3C, the underlying device 104 is an image intensifier. The transparent optical device 118 is transparent to light in a first spectrum (according to some predefined transmission efficiency), which in this case is the visible spectrum of light output by the phosphor screen 112. That is, the transparent optical device 118 is not fully transparent due to the blocking of the active devices, but transparency referred to herein refers to at least partial transparency according to some transmission efficiency. Note that overlapping as used herein means that elements are in the same optical path. This can be accomplished by having elements be in coaxial alignment when the optical path is straight. Alternatively, this can be accomplished by using various waveguides or other elements to align optical paths thus not requiring physical coaxial alignment.

A photodetector implemented in the transparent optical device absorbs a portion of the intensified light converting it to electrical signals. For example, the photodetector can be a two-dimensional array of light detectors, such as photodiodes, that generates charge currents, or any other form of digital data level proportional to intensity of the intensified light as a function of position. Accordingly, the photodetector may generate a two-dimensional array of electrical charge that represents the intensified image. In some embodiments, this two-dimensional array of electrical charge can be periodically read from the photodetector (e.g., the detected signal can be read from the photodetector in a fashion similar to a charged coupled device (CCD) camera). In some embodiments, the two-dimensional array of electrical signals from the photodetector is processed (such as by the image processor 119) and/or used locally, e.g., within the transparent optical device 118, at the readout or pixel levels, to modulate in real time the amplitude of the display light 128 emitted from the transparent optical device 118.

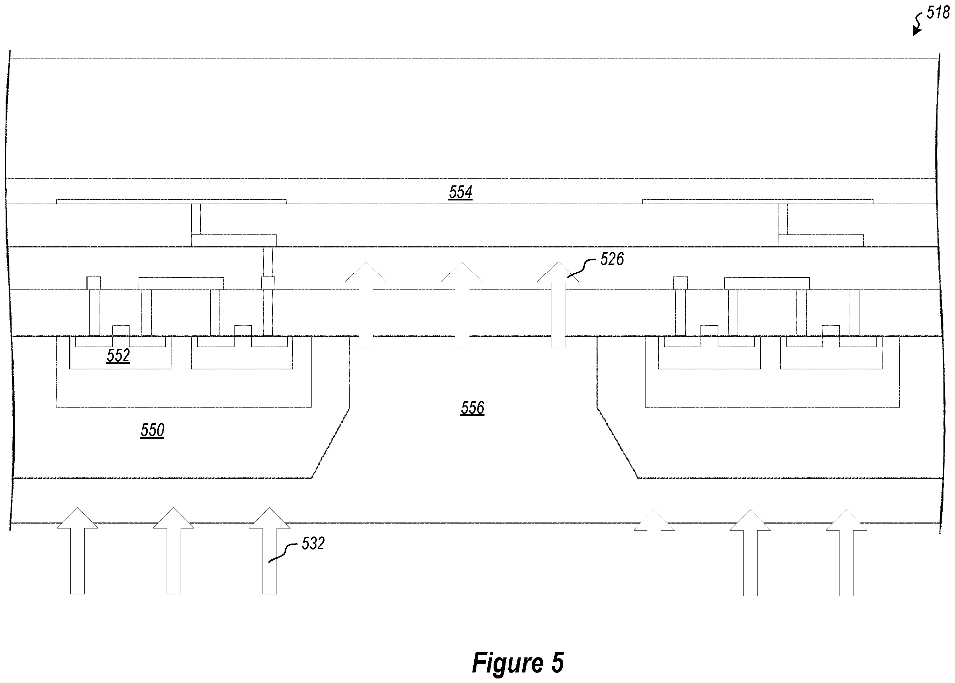

The transparent regions shown in the preceding figures can be created in a number of particular ways. In some embodiments, the transparent regions can be created by using the processes described in United States Patent Application serial number 16/686,306 titled "Backside Etch Process For Transparent Silicon Oxide Technology", which is incorporated herein by reference in its entirety. Briefly, that application describes a process for creating transparent regions in otherwise opaque portions of semiconductor materials. For example, reference is now made to Figure 5 which illustrates a transparent optical device 518 including active silicon islands (which may be native silicon islands) such as active silicon island 550. In particular, active silicon islands include transistors such as transistor 552 which control detectors and potentially OLED emitters in an OLED stack 554. In the example illustrated in Figure 5, each of the active silicon islands represents a pixel or sub-pixel of the transparent optical device 518. Thus, an image can be detected by active elements in the active region. Additionally, in some embodiments, by illuminating various LEDs in the OLED stack 554 using the transistors in the active silicon islands, an image can be created and output to a user, such as by outputting display light such as the display light 128 illustrated in Figure 3C.

As illustrated in Figure 3C, intensified light is transmitted through the transparent optical device 118 to the eyepiece of the nightvision system, and then to the user. Note, however, that the intensified light is transmitted to the user through the transparent optical device 118, meaning that the intensified light will be affected by characteristics of the transparent optical device 118. In the example illustrated in Figure 3C, light 128 represents the light output by the light emitting portions of the transparent optical device 118. Light 130 represents intensified light from the phosphor screen 112 transmitted through the transparent optical device 118. That is, light 130 may include or may be, in its entirety, light in the first spectrum.

Referring once again to Figure 5, light 526 represents a portion of light that is transmitted through transparent regions, illustrated by transparent region 556, of the transparent optical device 518, while light 532 represents a portion of light that is blocked by active portions of the transparent optical device 518. Light 532 may be detected by the transparent optical device 518 (or 118) and used as described herein. In particular, the light detected by the transparent optical device can be used for generating: a navigational heading, the speed at which the user is moving, coordinates, etc.

Note that in some embodiments, the transparent region 556 is backfilled with a transparent back fill material.

However, transmission of light through the transparent optical device is nonetheless increased by removing portions of silicon that are not needed for implementing active electrical components or for supporting metal traces. For example, consider an example where dynamic pixel cells are used. In this particular example, assume that there are two sub pixels per pixel. Anode size for the sub pixels is 8 µm × 5.1 µm. Pixel area is 10.1 µm × 12.4 µm. Pixel pitch is 22.5 µm × 22.5 µm. In one example, this provides a resolution of 800 × 800. In this particular transparent optical device, if non-active silicon islands (not shown) that are typically implemented are not removed, transparency of the transparent optical device is about 33%. In contrast, transparency is about 61% if the non-active silicon islands are removed such as in the structure illustrated in Figure 5. Thus, in this example, transparency of a transparent optical device is increased by more than 80% by removing silicon and/or oxide trenches.

Note that various engineering trade-offs can be made to meet certain requirements. For example, increased transparency can be obtained by having a lower resolution and/or using fewer sub pixels as there is more space between pixels and/or sub pixels. If a higher resolution is needed, then that transparent optical device will have a lower transparency than an equivalently sized transparent optical device with a lower resolution. Thus, for example, a transparent optical device with a 36 µm pitch can obtain a transparency of 81%, while a transparent optical device of 22.5 µm pitch can obtain a transparency of 67%, while a transparent optical device having a 17.5 µm pitch will be about 55% transparency when non-active silicon islands are removed from the transparent optical device in each of the illustrated examples. Thus, some embodiments may be able to create a transparent optical device with at least a 36 µm pitch with at least a transparency of 75%, or a transparent optical device of at least a 22.5 µm pitch with at least a transparency of 60%, or a transparent optical device having at least a 17.5 µm pitch with at least a 50% transparency when silicon is removed between active silicon islands. The preceding illustrates one specific example related to a particular manufacturing process.

Pitch and transparency values may be specific to a given semiconductor manufacturing process-also known as the technology or process node-and will of course vary as the node changes. Typically designating the process's minimum feature size, the technology node will dictate the area of required active silicon for the display CMOS based on the transistor size. As the node minimum feature size decreases, whether it be through alternate foundries or improvements in technology, the same need for maximizing transparency applies. Indeed, the benefit to removing non-active silicon islands improves as the ratio of inactive- to active-silicon increases with smaller transistors.

The example numbers described herein are derived assuming a 180 nm technology/process node, although similar calculations can be performed for any specific technology size.

In the example illustrated in Figure 3C, light 101 is input into the objective 102, where it is transmitted to an underlying device 104, in this case, an image intensifier. Figures 3A, 3B and 3C further illustrate the transparent optical device 118. As noted previously, the transparent optical device 118 includes light detectors that are able to detect light produced by the underlying device 104 to produce a feature map 132. The feature map 132 indicates features identified in different portions of a scene 133. In particular, analysis of the feature map 132 can show features detected in a scene 133 detected by the underlying device 104. In the example illustrated in Figure 3B, the feature map 132 shows a constellation feature 134 representing the constellation 136 in the scene 133. The feature map 132 further shows a terrain feature 138 generated from edge detection processes which detect the edge of the terrain 114 in the scene 133. Note that the feature map 132 can maintain relative position of the various objects in the scene 133. This can be used to determine navigational heading, speed at which the user is moving, coordinates, etc. as explained in more detail below.

Figures 3A, 3B and 3C further illustrate an image processor 119. The image processor 119 is able to create and/or process feature maps from features detected by the detectors in the transparent optical device 118. In particular, the image processor 119 can analyze and identify points, edges, shapes, etc. in the feature map.

In some embodiments, geolocation functionality may be aided by using features such as object edge detection, object recognition, identifying regions of interest, etc. in a feature map. This may be accomplished in some embodiments by the image processor including certain artificial intelligence and/or machine learning functionality.

Thus, embodiments include a nightvision system 100. The nightvision system 100 includes an underlying device 104. For example, an image intensifier is an example of an underlying device. Note that other underlying devices may be used in addition or alternatively. For example, some embodiments may include infrared CCD based or other low light level digital sensor system. The underlying device 104 is configured to provide output light in a first spectrum from input light received at the underlying device 104. Thus, for example, the first spectrum may be light produced by the phosphor screen 112.

The nightvision system 100 includes a transparent optical device, such as transparent optical device 118, optically coupled in an overlapping fashion to the underlying device 104. The transparent optical device 118 is configured to transmit light in the first spectrum from the underlying device 104 through the transparent optical device 118. The transparent optical device 118 includes: an active area of a semiconductor chip.

The active area includes a plurality of active elements configured to cause the underlying device 104 to detect light from the underlying device 104. For example, as described above, light detectors integrated into a photodetector may be used to detect light from the underlying device 104.

The transparent optical device 118 further includes a plurality of transparent regions formed in the active area which are transparent to the light in the first spectrum to allow light in the first spectrum to pass through from the underlying device 104 to a user. The transparent regions are configured in size and shape to cause the transparent optical device 118 to have a particular transmission efficiency for light in the first spectrum.

The nightvision system further includes an image processor, such as image processor 119 coupled to the transparent optical device 118. The image processor is configured to process feature maps, such as feature map 132, produced using light detected by the plurality of active elements. This processing can be used to generate a navigational heading, the speed at which the user is moving, coordinates, etc.

Additional components are illustrated in Figure 3A. In the example illustrated in Figure 3A, the image processor 119 receives input from the transparent optical device 118. The image processor 119 is further shown as receiving input from an integrated inertial measurement unit (IMU) sensor 120. The IMU sensor 120 may be integrated into the nightvision system 100. Typical IMU sensors include accelerometers, gyroscopes, and potentially magnetometers that can be used to indicate force, angular rate, orientation, etc. this information can be used in combination with features detected from information captured by the transparent optical device 118 to generate a navigational heading, the speed at which the user is moving, coordinates, etc. Alternatively or additionally, and inclinometer or similar device can provide additional data for determining a navigational heading, the speed at which the user is moving, coordinates.

Figure 3A further illustrates a clock 121 providing data to the image processor 119. This may be useful when making determinations having a temporal factor. For example, if the transparent optical device 118 and the image processor 119 are able to detect features associated with lunar, celestial, and/other events that change over time, timing may be important for establishing a navigational heading, the speed at which the user is moving, coordinates, etc. For example, if the moon is detected in a particular known location, a present time can be used to pinpoint a navigational heading, the speed at which the user is moving, coordinates, etc. For example, embodiments may utilize an angle of inclination to attain celestial position at a known date and time. This can be matched to a celestial motion catalog included in a database 126 to determine a user's location and orientation. Thus, global position and heading can be determined. Speed can be determined by using a plurality of captured images at various times where changes between captured images can be used to determine speed.

In an alternative or additional embodiment, determination of position, heading, and/or speed can be accomplished using terrain or landmark featured with lunar and/or celestial tracking. Examples of this are illustrated in Figure 3B, where a feature map 132 includes a terrain feature correlated with a constellation feature 134. In this example, the IMU and/or inclinometer does not need to be used for the determination.

Referring to Figure 3C, in some embodiments, a range finder 125 may be additional used for additional terrain, topography, and landmark tracking precision. Thus, for example, if the transparent optical device 118 is able to detect a particular topographical feature, landmark feature, or terrain feature, which is a known feature having a known location, and the range finder 125 is able to provide range information to the image processor 119, user position can be determined by using the known location of the known feature and simply adding the distance determined by the range finder 125. Note that the database 126 may include sufficient information that a perspective can be determined from the features detected by the transparent optical device 118 to allow for proper computation of position using the range finder 125 information and the known location of detected features.

Note that some embodiments may further include functionality for connecting to online databases such that various on-line videos, commercial maps, image search information, satellite images, etc., can be used to match detected features with known features. However, in many situations, the conditions that deny GPS signals will also deny other communications. Thus, in some embodiments, information may be stored locally in the database 126. This is particularly relevant when it is known beforehand in what area a user will be using the nightvision system 100. For example, the database 126 may store a topographical map including contour lines and the like. The database 126 may store star maps that are particularly relevant to the time and place where a user will be using the nightvision system 100. The database 126 may store images for particular landmarks or terrain that is expected to be encountered by the user. The database 126 may store satellite images for a general location.

Some embodiments may include functionality for using currently available information regarding cloud formations or other weather-related information to determine location. In particular, if doppler radar or other weather information is available, such as by on-line databases, to the nightvision system 100, and weather features can be detected, then this information can be used to determine a location, heading, and/or speed in a fashion similar to other methods of determining location, heading, and/or speed using detected features.

Some embodiments may use aircraft whose position is known to determine location, heading, and/or speed. For example, embodiments could have information about a drone with a known flight pattern sending light beacons and/or having other features detectable by the transparent optical device. Knowing the position of the aircraft both in actual space as well as in an image captured by the transparent optical device 118 can allow the image processor 119 to determine location, heading and/or speed of the nightvision system 100. Note that embodiments may use commercially available flight trackers providing flight tracking information on-line which can be compared with features detected by the transparent optical device 118.

As discussed previously, speed may be determined by the image processor 119. In some embodiments, this may be accomplished by using a sequential series of images captured by the transparent optical device. Knowing time between images and differences in location of the same features in each of the images can be used to estimate speed of travel.

Note that some embodiments may be implemented where a nightvision based "cairn" is used. For example, an object, detectable by nightvision systems, with known features can be left in a known location. When detected by a nightvision system 100, the cairn can be detected by the transparent optical device 118, and analyzed by the image processor 119 to estimate a location of the nightvision system 100 based on the known location. In some embodiments, the cairn may be implemented as a beacon. For example, in one particular embodiment, the cairn can output an IR signal that is detectable by the nightvision system, but imperceptible by a human's naked eye. The IR signal may have a particular pattern. For example, an IR signal pattern may be a series of light pulses representing different alphanumeric characters. The IR signal pattern may simply provide a unique identifier for the cairn where the database 126 includes a correlation (such as a table) correlating unique cairns with locations. Alternatively, the IR signal pattern may be configured to specifically identify the location of the cairn, such as by providing a longitude/latitude or other location identification.

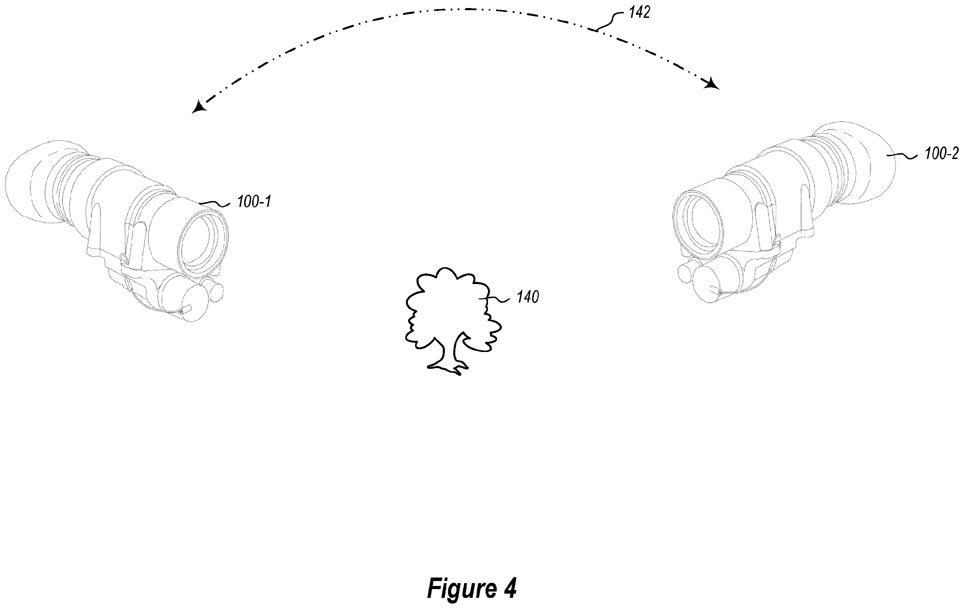

In some embodiments, additional precision or location estimation functionality can be achieved by coordinating feature detection from two different nightvision systems. An example of this is illustrated in Figure 4. Figure 4 illustrates a first nightvision system 100-1 and a second nightvision system 100-2. Each of the nightvision systems are able to detect an object 140. Further, transparent optical devices and image processors in each of the respective nightvision systems 100-1 and 100-2 are able to detect and characterize the object 140. 2. The nightvision systems 100-1 and 100-2 are able to communicate with each other through communication channels, such as channel 142, which may be, for example, a wireless communication channel using wireless communication hardware.

Various different location functions can be accomplished. For example, the nightvision system 100-1 can obtain more precise location and/or heading information by using information from a transparent optical device and image processor at the nightvision system 100-1 as well as by using information provided over the communication channel 142 obtained at the nightvision system 100-2 using a different transparent optical device and image processor at the nightvision system 100-2. Headsets looking at item to determine location of one of the headsets, and or location of an item.

In an alternative embodiment, one nightvision system can determine a location of a different nightvision system when both systems characterize the same object from different perspectives by sharing the characterization of the object between the nightvision systems. For example, nightvision system 100-1 and 100-2 may both characterize and create feature maps of the object 140 from different perspectives. When the nightvision system 100-2 share feature map information on the communication channel with the nightvision system 100-1, the nightvision system 100-1 can determine the location of the nightvision system 100-2.

In some embodiments, ifGPS position is known, this information can be used to determine or refresh heading and/or inclination. For example, embodiments can use known GPS position to determine or refresh heading or inclination by looking at the, moon, horizon or other landmarks and then back calculating from the known GPS location.

Embodiments may include functionality for determining a position of an object detected by the transparent optical device 118 and the image processor 119 once the position of a nightvision system is known. Typically, such systems work best by using passive means. In particular, such systems may function best when the image processor 119 computes the position of a detected object rather than measuring the distance of the detected object from the nightvision system 100. These computations may be performed using depth computed using captured images from a plurality of different nightvision systems. For example, stereoscopic computations can be used when transparent optical devices from two different nightvision systems capture images. In some embodiments, when the two different nightvision systems are implemented in a single headset, a single image processor can be used to process the images to compute distance and to further compute position using known position of a nightvision system. In other embodiments, communication can occur between image processors, such as is illustrated in Figure 4, allowing distance communications to be performed.

In an alternative example, a size of a detected object in an image captured by a transparent optical device can be used to compute distance from a nightvision system with a known location. For example, if an image processor known an expected size of an object, the detected size provides information that can be used to compute the distance of the object of the nightvision system. For example, expected sizes of classes of objects (such as human objects, vehicle objects, or building objects) can be known and used to compute distance from a known location of a nightvision system. In more advances systems, particular object sizes may be known. For example, systems may be able to identify a specific human and have specific information on the size of that specific human. Alternatively, systems may know the size of particular specific vehicles or buildings and may be able to use that information to compute distances from a known location of a nightvision system.

As discussed previously, in some embodiments, determined location, heading, and/or speed information using the methods illustrated herein can be displayed to the user using optional display functionality of the transparent optical device 118 or other devices. However, in other embodiments, such location, heading, and/or speed information can be transmitted to other entities. This may be done irrespective of whether or not the information is displayed to the user.

As noted previously, the nightvision system may be implemented where the underlying device 104 comprises an image intensifier.

The nightvision system 100 may be implanted where the image processor is configured to process images produced using light detected by the first plurality of active elements of the transparent optical device to identify celestial features to determine at least one of location, heading, elevation, or speed of the nightvision system.

The nightvision system 100 may be implanted where the image processor is configured to process images produced using light detected by the first plurality of active elements of the transparent optical device to identify topographical features to determine at least one of location, heading, elevation, or speed of the nightvision system.

The nightvision system 100 may be implanted where the image processor is configured to process images produced using light detected by the first plurality of active elements of the transparent optical device to identify landmark features to determine at least one of location, heading, elevation, or speed of the nightvision system.

The nightvision system 100 may further include a clock. The clock is used to process images produced using light detected by the first plurality of active elements of the transparent optical device to determine at least one of location, heading, elevation, or speed of the nightvision system or location of objects detected by the first plurality of active elements.

The nightvision system 100 may further include an IMU. The IMU is used to process images produced using light detected by the first plurality of active elements of the transparent optical device to determine at least one of location, heading, elevation, or speed of the nightvision system or location of objects detected by the first plurality of active elements.

The nightvision system 100 may further include a database. The database includes at least one of maps, topographic maps, satellite imagery, celestial motion catalog, or landmarks. At least one of the maps, topographic maps, satellite imagery, celestial motion catalog, or landmarks is used to process images produced using light detected by the first plurality of active elements of the transparent optical device to determine at least one of location, heading, elevation, or speed of the nightvision system or location of objects detected by the first plurality of active elements.

The nightvision system 100 may be implanted where the image processor is configured to process images produced using light detected by the first plurality of active elements of the transparent optical device to identify a cairn to determine at least one of location, heading, elevation, or speed of the nightvision system.

The nightvision system 100 may be implanted where the image processor is configured to process images produced using light detected by the first plurality of active elements of the transparent optical device to identify an IR beacon to determine at least one of location, heading, elevation, or speed of the nightvision system.

The following discussion now refers to a number of methods and method acts that may be performed. Although the method acts may be discussed in a certain order or illustrated in a flow chart as occurring in a particular order, no particular ordering is required unless specifically stated, or required because an act is dependent on another act being completed prior to the act being performed.

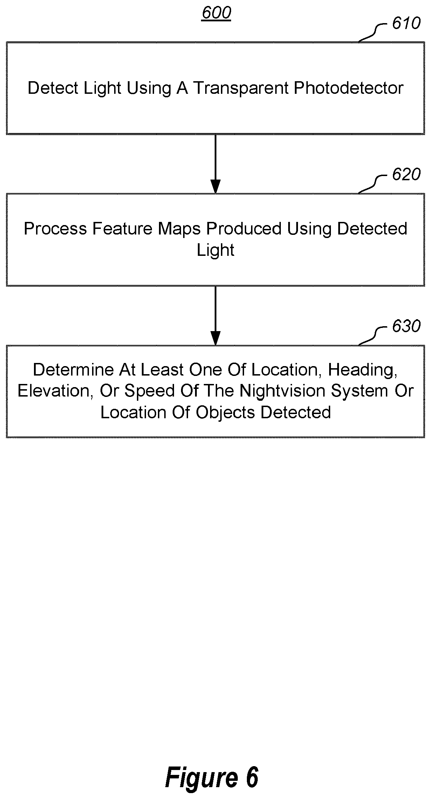

Referring now to Figure 6, a method 600 is illustrated. The method 600 includes detecting light using a transparent photodetector (act 610). For example, in one embodiments, output light is provided from an underlying device, in a first spectrum from input light received at the underlying device. The light in the first spectrum is transmitted through a transparent optical device optically coupled in an overlapping fashion to the underlying device, through an active area of a semiconductor chip, through a first plurality of transparent regions formed in the active area which are transparent to the light in the first spectrum to allow light in the first spectrum to pass through from the underlying device to a user. The first plurality of transparent regions are configured in size and shape to cause the transparent optical device to have a first transmission efficiency for the light in the first spectrum. In this example, the transparent optical device comprises the photodetector. Act 610 may be performed by detecting light from the underlying device using a first plurality of active elements (implemented as a photodetector, in this example) configured in the active area.

The method 600 further includes processing feature maps produced using the detected light (act 620) This may be performed at an image processor.

As a result, the method 600 further includes determining at least one of location, heading, elevation, or speed of the nightvision system or location of objects detected (act 630)

The method 600 may be practiced where processing feature maps comprises identifying celestial features to determine at least one of location, heading, elevation, or speed of the nightvision system.

The method 600 may be practiced where processing feature maps comprises identifying topographical features to determine at least one of location, heading, elevation, or speed of the nightvision system or location of objects detected by the first plurality of active elements.

The method 600 may be practiced where processing feature maps comprises identifying landmark features to determine at least one of location, heading, elevation, or speed of the nightvision system or location of objects detected by the first plurality of active elements.

The method 600 may be practiced where processing feature maps comprises using a clock input to determine at least one of location, heading, elevation, or speed of the nightvision system or location of objects detected by the first plurality of active elements.

The method 600 may be practiced where processing feature maps comprises using an IMU input to determine at least one of location, heading, elevation, or speed of the nightvision system or location of objects detected by the first plurality of active elements.

The method 600 may be practiced where processing feature maps comprises using at least one of maps, topographic maps, satellite imagery, celestial motion catalog, or landmarks in a database at the nightvision system to determine at least one of location, heading, elevation, or speed of the nightvision system or location of objects detected by the first plurality of active elements.

The method 600 may be practiced where wherein processing feature maps comprises using feature maps from a plurality of different nightvision systems.

Further, the methods may be practiced by a computer system including one or more processors and computer-readable media such as computer memory. In particular, the computer memory may store computer-executable instructions that when executed by one or more processors cause various functions to be performed, such as the acts recited in the embodiments.

The present invention may be embodied in other specific forms without departing from its characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A nightvision system comprising:
an underlying device, the underlying device configured to provide output light in a first spectrum from input light received at the underlying device;
a transparent optical device optically coupled in an overlapping fashion to the underlying device, wherein the transparent optical device is configured to transmit light in the first spectrum from the underlying device through the transparent optical device, the transparent optical device comprising: an active area of a semiconductor chip, the active area comprising:
a first plurality of active elements configured to cause the underlying device to detect light from the underlying device; and
a first plurality of transparent regions formed in the active area which are transparent to the light in the first spectrum to allow light in the first spectrum to pass through from the underlying device to a user, the first plurality of transparent regions being configured in size and shape to cause the transparent optical device to have a first transmission efficiency for light in the first spectrum; and
the nightvision system further comprising an image processor configured to process images produced using light detected by the first plurality of active elements of the transparent optical device to determine at least one of location, heading, elevation, or speed of the nightvision system or location of objects detected by the first plurality of active elements.

2. The nightvision system of claim 1, wherein the image processor is configured to process images produced using light detected by the first plurality of active elements of the transparent optical device to identify celestial features to determine at least one of location, heading, elevation, or speed of the nightvision system.

3. The nightvision system of claim 1, wherein the image processor is configured to process images produced using light detected by the first plurality of active elements of the transparent optical device to identify topographical features to determine at least one of location, heading, elevation, or speed of the nightvision system.

4. The nightvision system of claim 1, wherein the image processor is configured to process images produced using light detected by the first plurality of active elements of the transparent optical device to identify landmark features to determine at least one of location, heading, elevation, or speed of the nightvision system.

5. The nightvision system of claim 1, further comprising a clock, and wherein the clock is used to process images produced using light detected by the first plurality of active elements of the transparent optical device to determine at least one of location, heading, elevation, or speed of the nightvision system or location of objects detected by the first plurality of active elements.

6. The nightvision system of claim 1, further comprising an IMU, and wherein the IMU is used to process images produced using light detected by the first plurality of active elements of the transparent optical device to determine at least one of location, heading, elevation, or speed of the nightvision system or location of objects detected by the first plurality of active elements.

7. The nightvision system of claim 1, further comprising a database, the database comprising at least one of maps, topographic maps, satellite imagery, celestial motion catalog, or landmarks, wherein at least one of the maps, topographic maps, satellite imagery, celestial motion catalog, or landmarks is used to process images produced using light detected by the first plurality of active elements of the transparent optical device to determine at least one of location, heading, elevation, or speed of the nightvision system or location of objects detected by the first plurality of active elements.

8. The nightvision system of claim 1, wherein the image processor is configured to process images produced using light detected by the first plurality of active elements of the transparent optical device to identify a cairn to determine at least one of location, heading, elevation, or speed of the nightvision system.

9. The nightvision system of claim 1, wherein the image processor is configured to process images produced using light detected by the first plurality of active elements of the transparent optical device to identify an IR beacon to determine at least one of location, heading, elevation, or speed of the nightvision system.

10. The nightvision system of claim 1, wherein the image processor is configured to process images produced using light detected by the first plurality of active elements of the transparent optical device and images produced by a different nightvision system to determine at least one of location, heading, elevation, or speed of the nightvision system.
